# FASCICULE DE BREVET EUROPEEN

(11) **EP 2 326 811 B1**
(45) Date de publication et mention de la délivrance du brevet: **09.05.2012**
(21) Numéro de dépôt: 09782780.2
(22) Date de dépôt: 08.09.2009
(51) Int. Cl.: F01P 3/10, F16K 15/18, F16K 17/10

(54) **DISPOSITIF DE COMMANDE DE L'ALIMENTATION D'UN SYSTEME AVEC UN FLUIDE.**
VORRICHTUNG ZUR STEUERUNG DER FLUIDVERSORGUNG EINES SYSTEMS
DEVICE FOR CONTROLLING THE FLUID SUPPLY OF A SYSTEM

(30) Priorité: 09.09.2008 FR 0856052
(43) Date de publication de la demande: 01.06.2011
(73) Titulaire: Bontaz Centre, 74460 Marnaz (FR)
(72) Inventeur: PEROTTO, Stéphane, F-74130 Ayse (FR); LAGUETRE, Christophe, F-74300 THYEZ (FR); MANGIN, Marlène, F-74300 Araches La Frasse (FR)
(74) Mandataire: Ilgart, Jean-Christophe
(86) Numéro de dépôt international: PCT/EP2009/061647
(87) Numéro de publication internationale: WO 2010/029085

(56) Documents cités:
- EP-A- 0 370 131
- GB-A- 1 163 124
- GB-A- 2 431 219
- JP-A- 59 120 712

## Description

### DOMAINE TECHNIQUE ET ART ANTERIEUR

La présente invention se rapporte à un dispositif de commande de l'alimentation d'un système avec un fluide, par exemple de l'alimentation de gicleurs de refroidissement des pistons d'un moteur à combustion interne avec de l'huile.

Les gicleurs de refroidissement permettent de projeter un fluide de refroidissement, tel que de l'huile contre le fond des pistons.

Le fluide de refroidissement est amené sous pression jusqu'aux gicleurs qui vaporisent ce fluide lors de sa projection contre les pistons. La mise sous pression est obtenue au moyen d'une pompe hydraulique, entraînée directement par le moteur.

De tels gicleurs sont de deux types :
- un premier type de gicleur projette en permanence de l'huile contre les fonds des pistons, ceci indépendamment des conditions de fonctionnement du moteur.
- un deuxième type de gicleur comporte un clapet qui ne s'ouvre que lorsque la pression du fluide de refroidissement atteint une valeur seuil donnée. Le clapet est formé par un piston et un ressort, le piston coopérant avec un siège pour obturer le passage du fluide. Ainsi, lorsque le moteur tourne à faible régime, la pression du fluide de refroidissement est inférieure à la pression d'ouverture du clapet, les gicleurs ne sont pas alimentés. A régime moteur élevé, la pression du fluide de refroidissement augmente jusqu'à dépasser la valeur seuil d'ouverture du clapet. Le clapet s'ouvre, permettant l'alimentation des gicleurs et la projection du fluide de refroidissement contre le piston. L'alimentation en fluide de refroidissement ne peut être interrompue qu'en abaissant la pression du fluide de refroidissement, de sorte qu'elle repasse en dessous de la valeur seuil. Cette valeur seuil est fixée par le constructeur automobile. Cette valeur peut notamment être réglée en modifiant la charge du ressort. Ce type de gicleur présente l'avantage de réduire la consommation de fluide de refroidissement par rapport au gicleur du premier type.

Or, il est en permanence recherché une réduction dé cette consommation de fluide de refroidissement.

Le document EP0370131 décrit une vanne directionnelle pour fluide hydraulique comportant un clapet permettant le passage du fluide d'une chambre de pression vers une chambre de service lorsque le fluide a une pression supérieure à une pression donnée dans une chambre de contrôle du clapet, et une électrovanne provoquant la fermeture du clapet en permettant une échappement du fluide sous pression de la chambre de contrôle.

C'est par conséquent un but de la présente invention d'offrir un dispositif de commande d'alimentation en fluide de refroidissement, permettant de réduite avantage la consommation en fluide, et plus généralement c'est un but de la présente invention d'offrir un dispositif de commande de l'alimentation d'un système avec un fluide.

### EXPOSÉ DE L'INVENTION

Le but précédemment énoncé est atteint par un dispositif comportant un clapet permettant le passage d'un fluide d'un réservoir de fluide vers au moins un gicleur lorsque le fluide a une pression supérieure à une pression donnée, et une électrovanne apte à permettre l'injection dudit fluide sous pression de sorte à provoquer la fermeture du clapet.

En d'autres termes, on associe à une vanne unidirectionnelle commandée uniquement par la pression, une vanne à commande électrique pour permettre la fermeture de la vanne unidirectionnelle indépendamment de la pression du fluide.

Grâce à l'invention, l'interruption de l'alimentation en fluide est particulièrement simple, et peut être obtenue à tout niveau de pression, une réduction de la consommation en fluide peut alors être obtenue.

Par ailleurs, ce dispositif est de Conception simple et robuste et peut être adapté à toute configuration. En cas de défaillance, l'alimentation en fluide est assurée. Par conséquent, dans le cas de l'alimentation de gicleurs de refroidissement de pistons de moteur à combustion interne, le refroidissement des pistons est assuré.

La présente invention a alors principalement pour objet un dispositif de commande de l'alimentation d'un système à partir d'une source de fluide sous pression comportant un clapet destiné à être disposé entre un conduit d'arrivée de fluide sous pression et un conduit d'alimentation dudit système, ledit clapet permettant l'écoulement du fluide sous pression de la source au système lorsque la pression du fluide est au moins égale à une pression seuil, le clapet comportant un obturateur et un moyen élastique de rappel en appui contre une deuxième face de l'obturateur, une première face de l'obturateur opposée à la deuxième face étant destinée à recevoir un effort du fluide sous pression pour provoquer l'ouverture du clapet, le dispositif comportant également une électrovanne destinée à être montée dans un conduit de commande relié au conduit d'arrivée du fluide sous pression et amenant le fluide sous pression sur la deuxième face de l'obturateur, ladite électrovanne contrôlant la mise en contact de la deuxième face de l'obturateur avec le fluide sous pression, l'électrovanne étant fermée en l'absence d'alimentation électrique.

De manière avantageuse, le clapet comporte une douille de guidage du moyen élastique, ladite douille étant immobile, formant également butée pour l'obturateur en position d'ouverture maximale, la douille comportant un évidement recevant une extrémité du moyen élastique. L'obturateur peut être un piston, et comporter un évidement dans sa deuxième face recevant une autre extrémité du moyen élastique.

L'arrivée du fluide sous pression sur la deuxième face de l'obturateur s'effectue par exemple à travers la douille.

L'électrovanne est par exemple une électrovanne proportionnelle ou « tout ou rien ».

Le clapet peut comporter au moins un piquage débouchant dans une chambre délimitée par l'obturateur du côté de la deuxième face de l'obturateur, pour permettre l'écoulement du fluide piégé dans cette chambre lors de l'ouverture du clapet, ledit piquage étant destiné à être relié à un réservoir basse pression, les dimensions dudit piquage étant telles qu'elles permettent l'établissement d'une pression dans ladite chambre lorsque l'électrovanne est ouverte.

Par exemple, l'électrovanne comporte un noyau mobile dans une bobine et un circuit magnétique guidant le champ magnétique apte à être généré par la bobine, un moyen élastique interposé entre une butée magnétique et le noyau repoussant celui-ci vers l'extérieur de la bobine, un obturateur appliqué contre un siège par le moyen élastique par l'intermédiaire du noyau, le noyau étant attiré à l'intérieur de la bobine lorsqu'un champ magnétique est généré par la bobine, permettant à l'obturateur de décoller du siège.

Le moyen élastique de l'électrovanne est avantageusement en appui entre la butée magnétique et un épaulement du noyau, une partie du noyau étant entourée par le moyen élastique de sorte que, lorsque le noyau vient en butée contre la butée magnétique, le moyen élastique n'est pas complètement comprimé.

De manière avantageuse, le dispositif de commande selon l'invention peut comporter une enveloppe dans laquelle sont montés le clapet et l'électrovanne, de sorte à former un ensemble solidaire destiné à être monté dans un carter comportant les conduits d'arrivée, d'alimentation et de commande.

La présente invention a également pour objet un système de refroidissement d'au moins un piston de moteur à combustion interne comportant une pompe à huile entraînée par le moteur, au moins un gicleur d'huile sur le piston, ledit gicleur étant alimenté par la pompe à huile, un dispositif de commande selon la présente invention interposé entre la pompe à huile et le gicleur, le dispositif de commande étant monté sur un carter dans lequel sont réalisés le conduit d'arrivée d'huile sous pression connecté à la pompe à huile, le conduit d'alimentation connecté au gicleur, et le conduit de commande relié au conduit d'arrivée de l'huile sous pression.

### BRÈVE DESCRIPTION DES DESSINS

La présente invention sera mieux comprise à l'aide de la description qui va suivre et des dessins en annexes sur lesquels :
- la figure 1 est un vue en coupe d'un exemple de réalisation d'un dispositif de commande selon la présente invention dans une position d'alimentation des gicleurs,
- la figure 2A est une vue en coupe du dispositif de commande de la figure 1 au cours d'une phase d'interruption de l'alimentation des gicleurs,
- la figure 2B est une vue en coupe du dispositif de commande de la figure 1 dans une position d'interruption complète de l'alimentation des gicleurs,
- les figures 3A et 3B sont des vues de détail du dispositif de commande des figures 1, 2A et 2B,
- la figure 4 est un schéma de principe du dispositif de commande selon la présente invention.

### EXPOSÉ DÉTAILLÉ DE MODES DE RÉALISATION PARTICULIERS

Dans la description qui va suivre, l'exemple utilisé pour expliquer l'invention sera celui de l'alimentation des gicleurs de refroidissement, cependant la présente invention s'applique à tous les domaines utilisant des fluides et nécessitant une commande de leur alimentation.

En outre, nous utiliserons, à des fins de simplification, le terme « huile » pour parler du fluide hydraulique de refroidissement. Cependant il est à noter que la présente invention ne se limite pas à l'utilisation d'huile, et que tout fluide hydraulique apte à abaisser la température des pistons peut convenir.

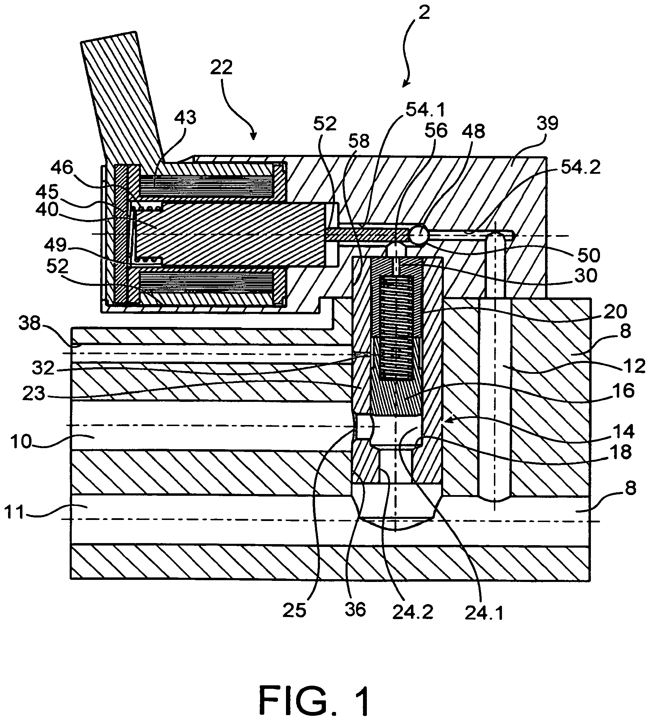

Sur les figures 1 à 3B, on peut voir un exemple de réalisation d'un dispositif de commande selon la présente invention.

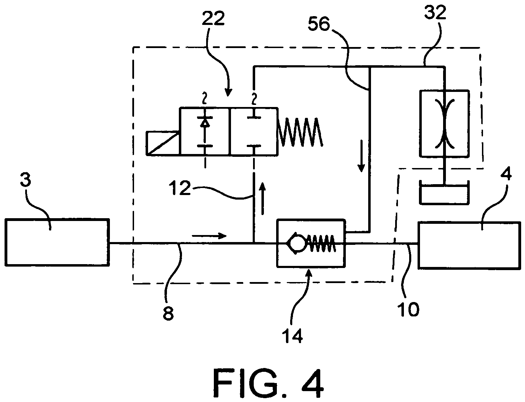

Le dispositif de commande 2 selon la présente invention est destiné à être disposé entre une source d'huile sous pression 3 (représentée symboliquement sur la figure 4) et au moins un gicleur d'huile 4 (représenté symboliquement sur la figure 4) destiné à projeter de l'huile contre le fond des pistons (non représentés) d'un moteur à combustion interne. Le dispositif de commande 2 contrôle l'alimentation en huile sous pression de plusieurs gicleurs, au moins un par piston.

Dans le cas de la commande de l'alimentation en huile des gicleurs, le dispositif de commande est destiné à être fixé sur un carter moteur 7.

Le carter moteur 7 comporte un conduit d'arrivée d'huile sous pression 8, un conduit 10 d'alimentation des gicleurs en huile sous pression et un conduit 12 de commande en interruption de l'alimentation des gicleurs en huile.

Le conduit d'arrivée d'huile 8 est reliée au conduit d'alimentation des gicleurs 10 et au conduit de commande 12.

Sur la figure 1, on peut voir le dispositif de commande 2 selon l'invention comportant un clapet 14 disposé dans le chemin d'écoulement de l'huile entre le conduit d'arrivée d'huile 8 et le conduit d'alimentation des gicleurs 10, et une électrovanne 22 interrompant ou permettant le passage de l'huile sous pression du conduit de commande 12 vers le clapet 14.

L'électrovanne 22 est destinée à être connectée à une unité de commande électronique (non représentée) envoyant des ordres d'ouverture ou de fermeture de l'électrovanne 22.

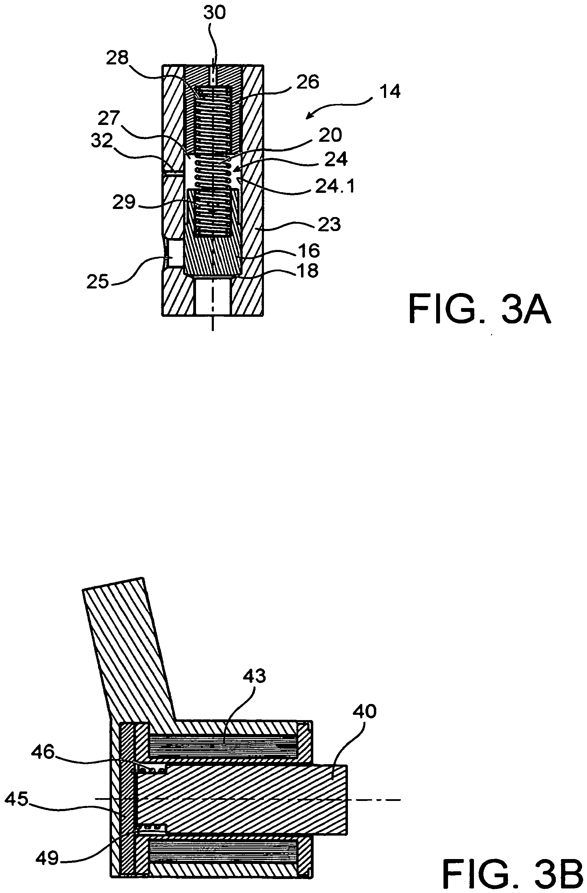

Sur la figure 3A, on peut voir le clapet 14 représenté seul, celui-ci comporte un obturateur mobile 16, un siège de clapet 18 avec lequel coopère l'obturateur mobile 16, et un moyen élastique 20 s'opposant au déplacement de l'obturateur mobile 16.

Selon l'invention, le conduit de commande 12 est tel qu'il amène une partie de l'huile sous pression venant du conduit d'arrivée 8 sur une deuxième face 16.2 de l'obturateur mobile 16 du clapet 14, opposée à une première face 16.1 recevant l'huile directement du conduit d'arrivée 8.

La première face 16.1 est une face de commande en ouverture, et la deuxième face 16.2 est une face de commande en fermeture.

Le clapet 14 comporte un corps cylindrique 23, percé d'un alésage traversant 24. L'alésage traversant 24 comporte une première portion de plus grand diamètre 24.1 et une deuxième portion de plus petit diamètre 24.2 se raccordant par une portée annulaire formant le siège de clapet 18, la portion de plus petit diamètre 24.2 étant orientée du côté du conduit d'arrivée 8.

Lorsque le dispositif de commande 2 est mis en place sur le carter moteur 7, le corps de clapet 23 est monté de manière étanche dans un alésage 36 du carter 7, l'alésage 36 reliant le conduit d'arrivée 8 et le conduit d'alimentation 10 des gicleurs.

Le corps de clapet 23 comporte un premier piquage radial 25 mettant en communication l'alésage 24 avec le conduit d'alimentation 10.

L'obturateur mobile 16, qui est formé, dans cet exemple de réalisation, par un piston, est monté coulissant dans la portion de plus grand diamètre 24.1.

La première face 16.1 du piston vient en appui contre le siège de clapet 18.

Le ressort 20 est monté en compression entre la deuxième face 16.2 du piston 16 et le corps du clapet 23.

Dans l'exemple représenté, il est prévu un élément de guidage 26 monté dans l'alésage 24, formé par une douille montée immobile dans l'alésage 24, par exemple montée à force dans l'alésage 24. La douille 26 comporte un évidement axial 28 recevant une extrémité du ressort 20, assurant un maintien du ressort 20.

Le piston 16 comporte également, de manière avantageuse un évidement central 29 pour recevoir une extrémité du ressort 20 améliorant son maintien.

La douille 26 comporte, dans son fond, un piquage axial 30 permettant à l'huile de s'écouler du conduit de commande 12 vers le piston 16.

De manière avantageuse, la douille 26 forme une butée en ouverture du piston, ce qui permet de régler facilement la course maximale du piston. En outre, la structure de montage du ressort 20 entre le piston 16 et la douille 26 permet de limiter la compression du ressort 20, et donc de réduire les risques de détérioration de celui-ci.

Le clapet 14 est normalement fermé, i.e. le clapet 14 est fermé lorsque la pression d'huile est inférieure à la pression seuil. Dans ce cas, le piston 16 est en appui sur le siège de clapet 18 et empêche l'alimentation des gicleurs. Dans cette configuration, le piston 16 est écarté de la douille 26 par le ressort 20.

Le corps 23 comporte un deuxième piquage radial 32 débouchant dans l'alésage 24 dans une chambre 27 délimitée par le piston 16 et la douille 26. Le deuxième piquage 32 forme un évent pour évacuer l'huile pouvant se trouver dans la chambre 27, lorsque le piston 16 se déplace dans l'alésage 24 en direction de la douille 26. Le piquage radial 32 est relié à un réservoir basse pression 33 représenté sur la figure 4, de sorte que la pression d'huile dans la chambre 27 ne s'oppose pas au déplacement du piston 16, lorsque l'électrovanne 22 est fermée.

Le clapet 14 est monté dans l'alésage 36 de sorte que le premier piquage radial 25 se trouve en face du conduit d'alimentation 10, et le deuxième piquage radial 32 se trouve en face d'un conduit d'évent 38 réalisé dans le carter 7.

Dans une variante avantageuse de réalisation, on prévoit de réaliser des gorges annulaires sur la périphérie extérieure du corps de clapet 23 dans lesquelles débouchent les piquages radiaux 25 et 32 respectivement, ces gorges assurant l'écoulement de l'huile vers le conduit d'alimentation 10 et le conduit d'évent 38 respectivement, quelle que soit l'orientation des piquages radiaux. Cette réalisation permet de faciliter le montage, puisqu'il n'est plus requis d'orienter précisément le corps du clapet par rapport au conduit 10 et 38 du carter 7, lors du montage du dispositif de commande dans le carter 7

Nous allons maintenant décrire l'électrovanne 22 en détail.

L'électrovanne est par exemple du type deux voies, deux positions. L'électrovanne peut être du type proportionnel ou du type « tout ou rien ».

L'électrovanne 22 est reçue dans une enveloppe 39.

Sur la figure 3B, l'électroaimant commandant l'ouverture et la fermeture de l'électrovanne est représenté de manière isolée.

L'électroaimant comporte un noyau 40 formant une masse magnétique, monté mobile dans une bobine 43 et est apte à générer un champ magnétique lorsqu'un courant le traverse. La bobine est reçue dans un logement 42 de l'enveloppe 39.

L'enveloppe 39 est avantageusement réalisée en un matériau ferromagnétique doux, canalisant le champ magnétique généré par la bobine 43, formant un circuit magnétique avec le noyau mobile 40. Une butée magnétique 45 est prévue à une extrémité de la bobine 43 pour fermer le circuit magnétique. De manière avantageuse, on prévoit un surmoulage en matériau plastique autour de la bobine 43 et la butée magnétique 45, ce qui permet de les solidariser aisément et de faciliter leur montage dans l'enveloppe 39.

Un moyen élastique 46, dans l'exemple représenté un ressort hélicoïdal, est monté en compression entre le noyau 40 et la butée magnétique 45, tendant à pousser le noyau 40 vers l'extérieur du logement 42.

De manière avantageuse, le noyau 40 comporte un épaulement 49, contre lequel une extrémité du ressort 46 est en appui, ainsi le ressort 46 entoure une partie du noyau 40. Lors du recul du noyau 40 sous l'effet du champ magnétique, celui-ci vient en butée contre la butée magnétique 45. D'une part, cette butée limite la course du noyau 40 et d'autre part, cela évite de comprimer complètement le ressort 46, cette réalisation réduit les risques de détérioration du ressort.

Lorsque la bobine 43 génère un champ magnétique, le noyau 40 est attiré vers l'intérieur de la bobine contre la butée magnétique 45, à l'encontre de l'effort exercé par le ressort 46.

Le conduit de commande 12 se prolonge dans l'enveloppe 39 par un conduit 54.

L'électrovanne 22 comporte également un obturateur 48 formé, dans l'exemple représenté, par une bille apte à être en appui sur un siège 50. La position de la bille 48 est fixée par le noyau 40 par l'intermédiaire d'une tige 52 reliant la bille 48 et le noyau 40. Il est bien entendu que cet exemple n'est en aucun cas limitatif et que tout type d'électrovanne peut convenir.

Le siège 50 est formé entre une portion de plus grand diamètre 54.1 et une portion de plus petit diamètre 54.2 du conduit 54, la bille 48 étant logée dans la portion de plus grand diamètre 54.1.

Le conduit de commande 12 se raccorde à l'alésage 24 du clapet au niveau de la portion de plus grand diamètre 54.1 du conduit 54 au moyen d'un piquage radial 56, en face du piquage axial 30 de la douille, le piquage radial 56 étant situé au-delà de la bille 48 dans le sens d'écoulement de l'huile.

L'électrovanne, en particulier la bille 48, le ressort 46 et les canaux sont dimensionnés pour que la bille 48 reste appliquée sur le siège 50 quelle que soit la pression de l'huile, tant qu'un ordre d'ouverture n'est pas donné.

L'enveloppe 39 de l'électrovanne est montée de manière étanche sur le carter 7, plus particulièrement une étanchéité est réalisée au niveau de la jonction entre le conduit de commande 12 et le conduit 54 et au niveau de la jonction entre le piquage axial 30 et le piquage radial 56.

Par ailleurs, une étanchéité est prévue entre l'électroaimant et l'enveloppe 39 pour éviter une fuite d'huile provenant du conduit commande 12.

De manière particulièrement avantageuse, le clapet 14, l'électrovanne 22 et l'enveloppe 39 sont réalisés comme un ensemble solidaire, qui est rapporté sur le carter moteur 7 sur lequel il est fixé, par exemple au moyen de vis ou de tout autre système.

Pour cela, on prévoit de fixer la clapet dans l'enveloppe 39, par exemple par un montage à force d'une extrémité du corps de clapet 23 dans un alésage 58 réalisé dans l'enveloppe 39, et dans lequel débouche le piquage radial 56. Ainsi, on dispose d'un ensemble d'un seul tenant facilement manipulable pour son montage sur le carter moteur 7.

Nous allons maintenant expliquer le fonctionnement du dispositif de commande selon la présente invention.

L'huile sous pression s'écoule dans le conduit d'arrivée 8 et dans le conduit de commande 12. La pression de l'huile s'applique sur la première face 16.1 du piston 16. Tant que la pression de l'huile est inférieure à la pression seuil, le clapet 14 reste fermé et les gicleurs ne sont pas alimentés (position non représentée). Aucun fluide n'est consommé par les gicleurs et il reste donc disponible pour d'autres utilisations dans le conduit 10 qui se prolonge par le conduit 11.

En l'absence de courant circulant dans la bobine 43, la bille 48 de l'électrovanne 22 est appliquée sur le siège 50 du fait de l'effort exercé par le ressort 46 sur le noyau 40. L'électrovanne 22 est donc fermée tant qu'un ordre d'ouverture ne lui est pas transmis, l'électrovanne 22 obture donc le conduit de commande 12 et isole la deuxième face 16.2 du piston 16, cette face 16.2 « ne voit » donc aucune pression. Nous rappelons que la chambre 27 est reliée à un réservoir basse pression.

Comme on peut le voir sur la figure 1, lorsque la pression de l'huile atteint la pression seuil, le piston 16 se déplace en direction de la douille 26 à l'encontre du ressort 20, la première face 16.1 du piston 16 se décolle de son siège 18 et permet l'écoulement de l'huile vers les gicleurs, ceux-ci sont alors alimentés. L'huile, contenue dans la chambre 27 entre le piston 16 et la douille 26, s'évacue par le deuxième piquage radial 32, qui est raccordée à une zone basse pression.

Le clapet 14 se referme lorsque la pression de l'huile devient inférieure à la pression seuil, ou sur commande de l'électrovanne 22.

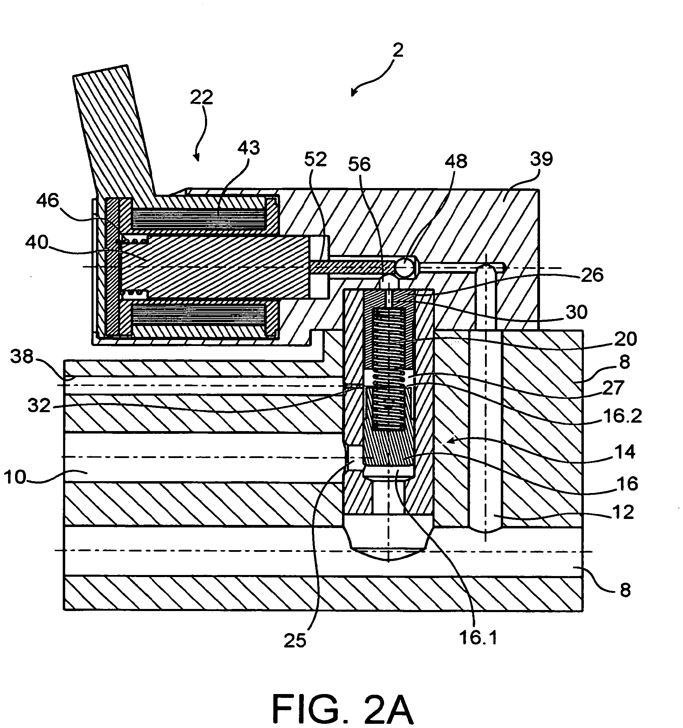

Lorsque l'on souhaite interrompre l'alimentation des gicleurs, un ordre d'ouverture de l'électrovanne 22 est donné par l'unité de commande, un courant électrique traverse la bobine 43 qui génère un champ magnétique, tendant à déplacer le noyau vers l'intérieur du logement 42 à l'encontre du ressort 46 contre la butée magnétique 45. La tige 52 n'exerce plus d'effort sur la bille 48 qui, sous l'action de la pression de l'huile se trouvant dans le conduit de commande 12 en amont de l'électrovanne, se décolle de son siège 50, comme on peut le voir sur la figure 2A. L'huile s'écoule alors dans le piquage radial 56, puis dans le piquage axial 30, traverse la douille 26, remplit la chambre 27 entre la douille 26 et le piston 16, et exerce un effort sur la deuxième face 16.2 du piston 16 dans le même sens que le ressort 20 de clapet 14. Le piston 16 se déplace alors en direction du siège 18 de clapet. Sur la figure 2A, on peut voir l'obturateur 16 en cours de déplacement en direction de son siège 18.

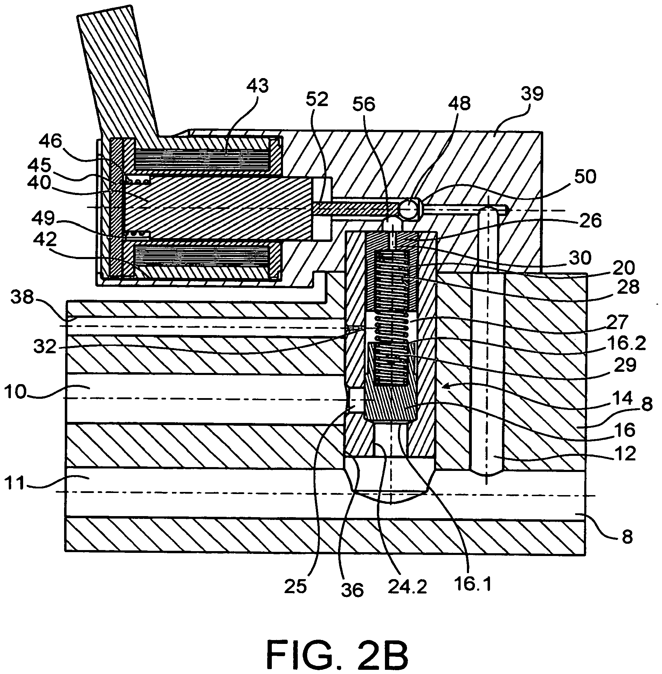

L'obturateur coulisse jusqu'à venir en appui contre celui-ci (figure 2B). Le clapet 14 est alors fermé et les gicleurs ne sont plus alimentés.

Le diamètre des piquages, notamment du deuxième piquage radial 32, est déterminé de sorte à ne pas créer une fuite trop importante qui empêcherait la montée en pression dans la chambre 27, et empêcherait l'huile provenant du conduit de commande 12 d'agir sur la deuxième face 16.2 du piston 16. Le diamètre du piquage 32 est également déterminé de sorte à permettre une fuite suffisante pour que l'huile présentée dans la chambre 27 ne s'oppose pas à l'ouverture du clapet 14.

Lorsque l'électrovanne est fermée, l'huile contenue dans la chambre 27 s'évacue par le piquage radial 32. Si les conditions de pression sont toujours remplies, le clapet s'ouvre à nouveau, sinon il reste fermé.

Le dispositif de commande selon l'invention permet d'autoriser ou d'interrompre l'alimentation des gicleurs de manière simple. De manière avantageuse, il est réalisé sous la forme d'un ensemble facilement manipulable, formé par le clapet, l'électrovanne et l'enveloppe 39.

Par ailleurs, cette fermeture est très rapide, et est possible à toute pression. Il s'agit donc d'un dispositif d'usage très large. Il permet de réduire la consommation d'huile, la capacité de la pompe à huile peut alors être réduite. Celle-ci étant entraînée directement par le moteur, on peut obtenir une réduction de la consommation en carburant.

Il est bien entendu que la disposition relative de l'électrovanne et du clapet des figures 1, 2A et 2B n'est en aucun cas limitative et toute autre disposition peut convenir, ce qui permet d'avoir une grande liberté dans la réalisation du dispositif.

Il est bien entendu qu'une réalisation sous la forme d'un ensemble à rapporter sur le carter n'est aucunement limitative et que l'on peut prévoir toute autre configuration.

Par ailleurs, ce dispositif requiert peu de puissance pour son actionnement, ce qui est particulièrement intéressant dans le cas des véhicules automobiles. L'électroaimant pouvant être de petite taille, la puissance requise pour actionner l'électrovanne est réduite.

Ce dispositif de commande est particulièrement adaptable et peut être réalisé en tenant compte des besoins de fermeture, de l'encombrement et des coûts de revient imposés.

Par ailleurs, ce dispositif offre une grande sécurité, même en fonctionnement dégradé. En effet, en cas de dysfonctionnement de l'électrovanne 22 la bille 48 reste appliquée sur le siège 50. De fait, l'obturateur 16 du clapet 14 n'est soumis qu'à la pression de l'huile sur sa première face 16.1. L'alimentation en huile s'effectue comme dans les dispositifs classiques, les pistons sont par conséquent toujours refroidis.

Sur la figure 4, on peut voir un schéma de principe de l'invention comprenant le conduit d'arrivée d'huile 8, le conduit d'alimentation 10 des gicleurs et le conduit de commande 12, le clapet 14 entre le conduit d'arrivée d'huile 8 et le conduit d'alimentation et l'électrovanne 22 entre le conduit de commande 12 et le clapet 14. Les flèches indiquent le sens d'écoulement du fluide.

Il est bien entendu que le dispositif de commande selon l'invention ne se limite pas à l'alimentation de gicleurs de refroidissement de pistons de moteur à combustion interne, mais s'applique à tout système dans lequel on souhaite commander de manière simple l'alimentation en fluide hydraulique, voire pneumatique.

## Revendications

1. Dispositif de commande de l'alimentation d'un système à partir d'un source de fluide sous pression comportant un clapet (14) destiné à être disposé entre un conduit d'arrivée de fluide (8) sous pression et un conduit d'alimentation (10) dudit système, ledit clapet (14) permettant l'écoulement du fluide sous pression de la source au système lorsque la pression du fluide est au moins égale à une pression seuil, le clapet (14) comportant un obturateur (16) et un moyen élastique de rappel (20)en appui contre une deuxième face (16.2) de l'obturateur (16), une première face (16.1) de l'obturateur (16) opposée à la deuxième face (16.2) étant destinée à recevoir un effort du fluide sous pression pour provoquer l'ouverture du clapet (14), le dispositif comportant également une électrovanne (22) destinée à être montée dans un conduit de commande (12) relié au conduit d'arrivée (8) du fluide sous pression et amenant le fluide sous pression sur la deuxième face (16.2) de l'obturateur (16), ladite électrovanne (22) contrôlant la mise en contact de la deuxième face (16.2) de l'obturateur (16) avec le fluide sous pression, l'électrovanne (22) étant fermée en l'absence d'alimentation électrique.

2. Dispositif de commande selon la revendication 1, dans lequel le clapet (14) comporte une douille de guidage (26) du moyen élastique (20), ladite douille (26) étant immobile, formant également butée pour l'obturateur (16) en position d'ouverture maximale, la douille (26) comportant un évidement recevant une extrémité du moyen élastique (20).

3. Dispositif de commande selon la revendication 1 ou 2, dans lequel l'obturateur (16) est un piston, comportant un évidement dans sa deuxième face (16.2) recevant une autre extrémité du moyen élastique (20).

4. Dispositif de commande selon la revendication 2, dans lequel l'arrivée du fluide sous pression sur la deuxième face (16.2) de l'obturateur (16) s'effectue à travers la douille (26).

5. Dispositif de commande selon l'une des revendications 1 à 4, dans lequel l'électrovanne (22) est une électrovanne proportionnelle ou « tout ou rien ».

6. Dispositif de commande l'une des revendications 1 à 5, dans lequel le clapet (14) comporte au moins un piquage (32) débouchant dans une chambre (27) délimitée par la deuxième face (16.2) de l'obturateur (16) pour permettre l'écoulement du fluide piégé dans cette chambre (27) lors de l'ouverture du clapet (14), ledit piquage (32) étant destiné à être relié à un réservoir basse pression, les dimensions dudit piquage (32) étant telles qu'elles permettent l'établissement d'une pression dans ladite chambre (27) lorsque l'électrovanne (22) est ouverte

7. Dispositif de commande l'une des revendications 1 à 6, dans lequel l'électrovanne (22) comporte un noyau mobile (40) dans une bobine (43) et un circuit magnétique (39, 45) guidant le champ magnétique apte à être généré par la bobine (43), un moyen élastique (46) interposé entre une butée magnétique (45) et le noyau (40) repoussant celui-ci vers l'extérieur de la bobine (43), un obturateur (48) appliqué contre un siège (50) par le moyen élastique (46) par l'intermédiaire du noyau (40), le noyau (40) étant attiré à l'intérieur de la bobine (43) lorsqu'un champ magnétique est généré par la bobine (43), permettant à l'obturateur (48) de décoller du siège (50).

8. Dispositif de commande selon la revendication précédente, dans lequel le moyen élastique (46) de l'électrovanne (22) est en appui entre la butée magnétique (45) et un épaulement du noyau (40), une partie du noyau (40) étant entourée par le moyen élastique (46) de sorte que lorsque le noyau (40) vient en butée contre la butée magnétique (45), le moyen élastique (40) n'est pas complètement comprimé.

9. Dispositif de commande l'une des revendications 1 à 8, comportant une enveloppe (39) dans laquelle sont montés le clapet (14) et l'électrovanne (22) de sorte à former un ensemble solidaire destiné à être monté dans un carter (7) comportant les conduits d'arrivée (8), d'alimentation (10) et de commande (12).

10. Système de refroidissement d'au moins un piston de moteur à combustion interne comportant une pompe à huile (3) entraînée par le moteur, au moins un gicleur (4) d'huile sur le piston, ledit gicleur étant alimenté par la pompe à huile, un dispositif de commande (2) selon l'une des revendications précédentes interposé entre la pompe à huile (3) et le gicleur (4), le dispositif de commande étant monté sur un carter (7) dans lequel sont réalisés le conduit d'arrivée (8) d'huile sous pression connecté à la pompe à huile, le conduit d'alimentation (10) connecté au gicleur, et le conduit de commande (12) relié au conduit d'arrivée (8) de l'huile sous pression.

## Claims

1. A device for controlling the supply of a system from a fluid under pressure source comprising a valve (14) intended to be positioned between a fluid under pressure inlet pipe (8) and a supply pipe (10) of said system, said valve (14) allowing the fluid under pressure to flow out from the source to the system when the pressure of the fluid is at least equal to a threshold pressure, the valve (14) having a closure member (16) and an return elastic means (20) supported on a second face (16.2) of the closure member (16), a first face (16.1) of the closure member (16) opposite the second face (16.2) being intended to receive an effort from the fluid under pressure to cause the opening of the valve (14), and the device also comprising a solenoid valve (22) intended to be installed in a control pipe (12) connected to the fluid under pressure inlet pipe (8) and conveying the fluid under pressure to the second face (16.2) of the closure member (16), said solenoid valve (22) controlling the contact of the second face (16.2) of the closure member (16) with the fluid under pressure, and the solenoid valve (22) being closed if there is no electrical power.

2. A control device according to claim 1, in which the valve (14) comprises a sleeve (26) for guiding the elastic means (20), said sleeve (26) being immobile, also forming a stop for the closure member (16) in its maximum opening position, and the sleeve (26) comprising a recess receiving one end of the elastic means (20).

3. A control device according to claim 1 or 2, in which the closure member (16) is a piston, comprising a recess in its second face (16.2) receiving another end of the elastic means (20).

4. A control device according to claim 2, in which the fluid under pressure arrives at the second face (16.2) of the closure member (16) through the sleeve (26).

5. A control device according to one of the claims 1 to 4, in which the solenoid valve (22) is a proportional or "on-off" solenoid valve.

6. A control device according to one of the claims 1 to 5, in which the valve (14) comprises at least one spur (32) leading to a chamber (27) formed by the second face (16.2) of the closure member (16) to allow the outflow of the fluid trapped in this chamber (27) when the valve (14) is opened, said spur (32) being intended to be connected to a low-pressure tank, and the dimensions of said spur (32) being such that they allow pressure to be established in said chamber (27) when the solenoid valve (22) is opened.

7. A control device according to one of the claims 1 to 6, in which the solenoid valve (22) comprises a mobile core (40) in a coil (43) and a magnetic circuit (39, 45) guiding the magnetic field able to be generated by the coil (43), an elastic means (46) interposed between a magnetic stop (45) and the core (40) pushing the latter to the outside of the coil (43), a closure member (48) pressed against a seat (50) by the elastic means (46) through the core (40), and in which the core (40) is attracted inside the coil (43) when a magnetic field is generated by the coil (43), allowing the closure member (48) to become separated from the seat (50).

8. A control device according to the previous claim in which the elastic means (46) of the solenoid valve (22) is supported between the magnetic stop (45) and a shoulder of the core (40),a part of the core (40) being surrounded by the elastic means (46) such that, when the core (40) abuts against the magnetic stop (45) the elastic means (40) is not completely compressed.

9. A control device according to one of the claims 1 to 8, comprising a casing (39) in which are installed the valve (14) and the solenoid valve (22) so as to form a secure assembly intended to be installed in a housing (7) comprising the inlet (8), supply (10) and control (12) pipes.

10. A system for cooling at least one internal combustion engine piston comprising an oil pump (3) driven by the engine, at least one jet (4) protecting oil on the piston, said jet being supplied by the oil pump, a control device (2) according to one of the preceding claims interposed between the oil pump (3) and the jet (4), where the control device is installed on a engine block (7) in which are installed the pressurised oil inlet pipe (8) connected to the oil pump, the supply pipe (10) connected to the jet, and the control pipe (12) connected to the pressurised oil inlet pipe (8).

## Patentansprüche

1. Vorrichtung zur Steuerung der Versorgung eines Systems ausgehend von einer Druckfluidquelle, umfassend ein Sperrventil (14), das zwischen einer Druckfluidzufuhrleitung (8) und eine Versorgungsleitung (10) des Systems anzubringen ist, wobei das Sperrventil (14) das Strömen des Druckfluids von der Quelle in das System ermöglicht, wenn der Druck des Fluids mindestens gleich einem Schwellendruck ist, wobei das Sperrventil (14) eine Verschlussvorrichtung (16) und ein gegen eine zweite Fläche (16.2) der Verschlussvorrichtung (16) gestütztes elastisches Rückstellmittel (20) aufweist, wobei eine erste, der zweiten Fläche (16.2) entgegengesetzte Fläche (16.1) der Verschlussvorrichtung (16) zum Aufnehmen eines Drucks des Druckfluids dient, um ein Öffnen des Sperrventils (14) hervorzurufen, wobei die Vorrichtung auch ein Elektromagnetventil (22) aufweist, das in einer Steuerleitung (12), die mit der Zufuhrleitung (8) des Druckfluids verbunden ist und das Druckfluid an die zweite Fläche (16.2) der Verschlussvorrichtung (16) führt, anzubringen ist, wobei das Elektromagnetventil (22) das Inkontaktbringen der zweiten Fläche (16.2) der Verschlussvorrichtung (16) mit dem Druckfluid kontrolliert, wobei das Elektromagnetventil (22) bei Abwesenheit einer Stromversorgung geschlossen ist.

2. Steuervorrichtung nach Anspruch 1, wobei das Sperrventil (14) eine Führungshülse (26) des elastischen Mittels (20) aufweist, wobei die Hülse (26) unbeweglich ist und auch einen Anschlag für die Verschlussvorrichtung (16) in der Postition maximaler Öffnung bildet, wobei die Hülse (26) eine Aussparung aufweist, die ein Ende des elastischen Mittels (20) aufnimmt.

3. Steuervorrichtung nach Anspruch 1 oder 2, wobei die Verschlussvorrichtung (16) ein Kolben ist, der in dessen zweiter Fläche (16.2) eine Aussparung aufweist, die ein anderes Ende des elastischen Mittels (20) aufnimmt.

4. Steuervorrichtung nach Anspruch 2, wobei die Zufuhr des Druckfluids an die zweite Fläche (16.2) der Verschlussvorrichtung (16) durch die Hülse (26) hindurch erfolgt.

5. Steuervorrichtung nach einem der Ansprüche 1 bis 4, wobei das Elektromagnetventil (22) ein proportionales oder "Alles oder Nichts"-Elektromagnetventil ist.

6. Steuervorrichtung nach einem der Ansprüche 1 bis 5, wobei das Sperrventil (14) mindestens eine Ausbohrung (32) aufweist, die in eine Kammer (27) mündet, die von der zweiten Fläche (16.2) der Verschlussvorrichtung (16) begrenzt ist, um das Ausströmen des in dieser Kammer (27) gefangenen Fluids während der Öffnung des Sperrventils (14) zu ermöglichen, wobei die Ausbohrung (32) mit einem Vorratsbehälter niedrigen Drucks verbunden sein soll, wobei die Abmessungen der Ausbohrung (32) derart sind, dass sie das Ausbilden eines Drucks in der Kammer (27), wenn das Elektromagnetventil (22) geöffnet ist, ermöglichen.

7. Steuervorrichtung nach einem der Ansprüche 1 bis 6, wobei das Elektromagnetventil (22) einen in einer Spule (43) beweglichen Kern (40) und einen magnetischen Kreis (39, 45), der das Magnetfeld, das durch die Spule (43) erzeugt werden kann, führt, ein elastisches Mittel (46), das zwischen einem magnetischen Anschlag (45) und dem Kern (40) so positioniert ist, dass es diesen aus der Spule (43) hinaus treibt, eine Verschlussvorrichtung (48), die durch das elastische Mittel (46) über den Kern (40) an einem Sitz (50) anliegt, wobei der Kern (40) ins Innere der Spule (43) gezogen wird, wenn durch die Spule (43) ein Magnetfeld erzeugt wird, wodurch sich die Verschlussvorrichtung (48) vom Sitz (50) lösen kann, aufweist.

8. Steuervorrichtung nach dem vorhergehenden Anspruch, wobei das elastische Mittel (46) des Elektromagnetventils (22) gegen den magnetischen Anschlag (45) und eine Schulter des Kerns (40) gestützt ist, wobei ein Teil des Kerns (40) von dem elastischen Mittel (46) derart umgeben ist, dass, wenn der Kern (40) zum Anschlag mit dem magnetischen Anschlag (45) kommt, das elastische Mittel (40) nicht vollständig zusammengepresst ist.

9. Steuervorrichtung nach einem der Ansprüche 1 bis 8, die eine Hülle (39) aufweist, in der das Sperrventil (14) und das Elektromagnetventil (22) derart angebracht sind, dass sie ein einstückiges System bilden, das in einem Gehäuse (7) anzubringen ist, das die Zufuhr- (8), Versorgungs- (10) und Steuerleitungen (12) aufweist.

10. System zur Kühlung von mindestens einem Kolben eines Verbrennungsmotors, das eine durch den Motor angetriebene Ölpumpe (3), mindestens eine Öldüse (4) an dem Kolben, wobei die Düse durch die Ölpumpe versorgt wird, eine Steuervorrichtung (2) nach einem der vorhergehenden Ansprüche, die zwischen der Ölpumpe (3) und der Düse (4) positioniert ist, aufweist, wobei die Steuervorrichtung an einem Gehäuse (7) angebracht ist, in dem die mit der Ölpumpe verbundene Zufuhrleitung (8) von Drucköl, die mit der Düse verbundene Versorgungsleitung (10) und die mit der Zufuhrleitung (8) von Drucköl verbundenen Steuerleitung (12) realisiert sind.
